(19) Europäisches Patentamt
European Patent Office
Office européen des brevets

(11) **EP 4 439 276 A1**

(12) **EUROPEAN PATENT APPLICATION**

(43) Date of publication:
**02.10.2024 Bulletin 2024/40**

(21) Application number: **23164648.0**

(22) Date of filing: **28.03.2023**

(51) International Patent Classification (IPC):
***G06F 8/41*** *(2018.01)*

(52) Cooperative Patent Classification (CPC):
**G06F 8/423; G06F 8/447; G06F 8/451**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Hawai.Tech**
**38000 Grenoble (FR)**

(72) Inventors:
• **BERNERT, Marie**
**38000 Grenoble (FR)**

• **CHERKAOUI, Abdelkarim**
**38000 Grenoble (FR)**
• **LAURENT, Raphaël**
**38000 Grenoble (FR)**
• **SIMATIC, Jean**
**38000 Grenoble (FR)**

(74) Representative: **A.P.I. Conseil**
**Technopôle Hélioparc**
**4, rue Jules Ferry**
**64000 Pau (FR)**

(54) **SEMICONDUCTOR SYSTEMS AND COMPUTER-IMPLEMENTED METHODS OF PROBABILISTIC INFERENCE DATA PROCESSING**

(57) The subject application provides a semiconductor system (100) and a computer-implemented method configured to provide probabilistic inference data processing for solving probabilistic model.

The inventors have found that using a dedicated processor-coprocessor architecture enables the acceleration of sampling-based algorithms for solving probabilistic models.

In particular, the inventors propose to configure a precompiler (150) that astutely distribute between a processor and a coprocessor (120), the executable instructions associated with portions of the computer program code (30) implementing the sampling-based algorithms.

With the proposed architecture, the developer of a sampling-based algorithm does not have to explicitly code the drawing of random samples from probability distribution functions or part of a probabilistic fusion of probability distribution functions, since the corresponding executable instructions would be executed by the coprocessor (120) after a function call has been detected for the drawing of random samples from probability distribution functions or a probabilistic fusion.

[Fig. 1]

Fig. 1

EP 4 439 276 A1

**Description**

**Technical Field**

The subject application relates to hardware for probabilistic programming. In particular, it relates to semiconductor systems and computer-implemented methods configured to provide probabilistic inference data processing for solving probabilistic models.

**Background Art**

The skilled person knows that the goal of probabilistic programming is to automate inference in probabilistic models that are expressed as a computer program code.

The skilled person also knows that such probabilistic models can be solved using approximate inference algorithms that can be either sampling-based or optimization-based.

It is also known that optimization-based algorithms are considered faster than sampling-based algorithms, thanks to physical implementations where corresponding computer program code is accelerated on Graphics Processing Units (GPUs) that are working in parallel.

However, such implementations are inefficient when applied to sampling-based algorithms.

Indeed, having several GPUs that are working in parallel won't provide proper acceleration because sampling-based algorithms require to execute sequentially some operations before some other operations.

Hence, having several GPUs that are working in parallel won't help.

It is an object of the present subject application to provide a mechanism for enabling acceleration of sampling-based algorithms for solving probabilistic models.

**Summary of Subject application**

The subject application provides a semiconductor system and a computer-implemented method configured to provide probabilistic inference data processing for a solving probabilistic model, as described in the accompanying claims.

Dependent claims describe specific embodiments of the subject application.

These and other aspects of the subject application will be apparent from and elucidated based on the embodiments described hereinafter.

**Brief Description of Drawings**

Further details, aspects and embodiments of the subject application will be described, by way of example only, with reference to the drawings. In the drawings, like reference numbers are used to identify like or functionally similar elements. Elements in the figures are illustrated for simplicity and clarity and have not necessarily been drawn to scale.

Figure 1 shows a schematic diagram of a semiconductor system according to the subject application.
Figure 2 shows a schematic flow diagram according to the subject application.

**Description of Embodiments**

In order not to obfuscate or distract from the teachings of the subject application, and because the illustrated embodiments of the subject application may, for the most part, be composed of components known to the skilled person, details will not be described in any greater extent than that considered necessary for the understanding and appreciation of the underlying concepts of the subject application.

The inventors have found that using a dedicated processor-coprocessor architecture enables the acceleration of sampling-based algorithms for solving probabilistic models.

In particular, the inventors propose to configure a precompiler that astutely distribute between a processor and a coprocessor, the executable instructions associated with portions of the computer program code implementing the sampling-based algorithms.

Indeed, in the subject application, the coprocessor is configured to be specialized in efficiently executing probability distribution calculations.

For instance, in the subject application, the coprocessor is configured to be specialized in efficiently executing the drawing of random samples from probability distribution functions.

Also, in the subject application, the coprocessor is configured to be specialized in efficiently executing at least part of a probabilistic fusion of probability distribution functions. Put simply, a probabilistic fusion is an operation that comprises the computing of a probability distribution (which may be approximated by a set of samples) on a variable V knowing a set of observations/measurements $O_i$ and knowing a binary relation between V and each $O_i$.

For example, in the context of an autonomous car, the positioning of the wheel of the car using a set of car sensor values (i.e., the observations) is a probabilistic fusion.

With the proposed architecture, the developer of a sampling-based algorithm does not have to explicitly write a code for the drawing of random samples from probability distribution functions or part of a probabilistic fusion, since the corresponding executable instructions would be executed by the coprocessor after a function call has been detected for the drawing of random samples from probability distribution functions or part of a probabilistic fusion.

**First aspect: the semiconductor system**

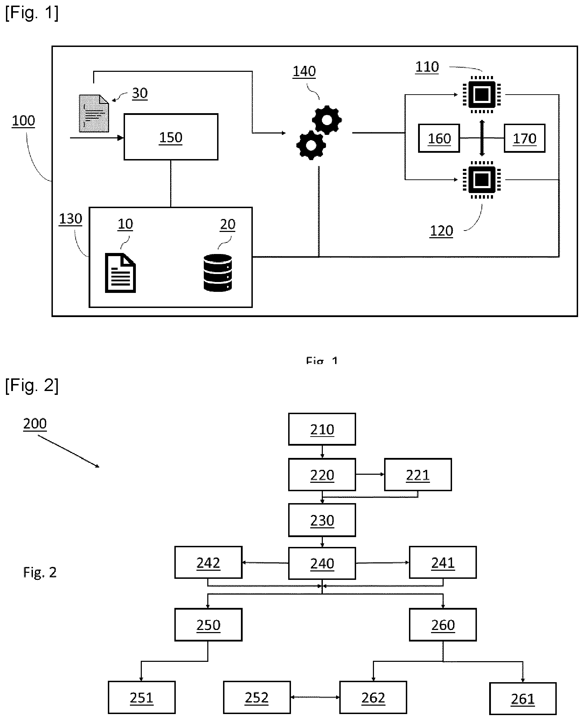

A first aspect of the subject application is illustrated in figure 1 and relates to a semiconductor system 100 that is configured to provide probabilistic inference data processing.

In an example of the first aspect of the subject application, the semiconductor system 100 is implemented on a programmable system-on-chip platform such as the known Adaptive Compute Acceleration Platform (ACAP™) that includes a large FPGA fabric.

However, other known system-on-chip platforms, programmable or specialized hardware, may be used, without requiring any substantial modification of the subject application.

Similar to a Graphics Programming Unit (GPU) which is a specialized electronic circuit dedicated to graphics rendering, the semiconductor system 100 can be considered as a Probabilistic Inference Programming Unit (PIPU) which is a specialized electronic circuit dedicated to probabilistic inference data processing.

In the first aspect of the subject application, the semiconductor system 100 comprises at least one main processor 110, at least one coprocessor 120, at least one memory 130, at least one compiler 140 and at least one precompiler 150.

In other words, one should understand that the semiconductor system 100 may comprise more than one main processor 110, more than one coprocessor 120, more than one memory 130 more than one compiler 140 and/or more than one precompiler 150.

In an embodiment of the first aspect of the subject application, one or more among, the main processor 110, the coprocessor 120, the memory 130, the compiler 140 and the precompiler 150, are semiconductor devices.

In the first aspect of the subject application, the main processor 110 and the coprocessor 120 are of known types such as a CPU, an ASIC, FPGA or any other suitable processor that can execute executable instructions associated with one or more computer program codes.

As used herein, a computer program code is a list of executable instructions, such as a particular application program and/or an operating system. The computer program code may for example include one or more of a subroutine, a function, a procedure, an object method, an object implementation, an executable application, an applet, a servlet, a source code, an object code, a shared library/dynamic load library and/or other sequence of instructions designed for execution on a computer system.

In the first aspect of the subject application, the executable instructions may be stored in the memory 130 before being executed by the main processor 110 and/or the coprocessor 120.

As generally known in the art of data processing devices having a main processor, a coprocessor is a microprocessor that is distinct from the main processor and that is used to perform specified functions that the main processor cannot perform at all or cannot perform as well and/or as quickly.

In particular, a processor, also known as a central processing unit (CPU), is the main component of a computer system that carries out most of the processing tasks. It is responsible for executing instructions that are stored in memory and for performing calculations and logical operations. CPUs can have one or more processing cores, each capable of executing multiple instructions simultaneously.

In contrast, a coprocessor, also called an auxiliary processor or math coprocessor, is a specialized component that works alongside the CPU to perform specific tasks more efficiently. Coprocessors are designed to handle complex mathematical operations, such as floating-point arithmetic, which can be time-consuming for a CPU to perform. They can also offload certain tasks from the CPU to improve overall performance.

In the first aspect of the subject application, the coprocessor 120 is configured to perform probabilistic inference data processing that cannot be performed at all or that cannot be performed as well and/or as quickly by the main processor 110.

In the first aspect of the subject application, the memory 130 is of known type as R FLASH memory, EEPROM, EPROM, ROM; ferromagnetic or antiferromagnetic digital memories; MRAM; volatile storage media including registers, buffers or caches, main memory, RAM or any other suitable volatile or non volatile electronic data storage.

In particular, the memory 130 is configured to store a set of role profiles 10 and a function signature database 20.

In an embodiment of the memory 130, the set of role profiles 10 is stored as one or more files, one or more sections of executable instructions, one or more separate records or same record of a database, or any other suitable file structure that is accessible by the main processor 110 and/or the coprocessor 120.

In practice, each role profile 10 of the set of role profiles 10 defines the role of the main processor 110 and the role of the coprocessor 120 in executing executable instructions associated with one or more computer program codes.

In a first embodiment of the set of role profiles 10, at least one role profile 10 defines the role of each of a plurality of main processors 110.

In other words, one should understand that more than one role profile 10 may be used in combination to define the role of each of a plurality of main processors 110.

In a second embodiment of the set of role profiles 10, at least one role profile 10 defines the role of each of a plurality of coprocessors 120.

In other words, one should understand that more than one role profile 10 may be used in combination to define the role of each of a plurality of main coprocessors 120.

The function signature database 20 associates a function signature with at least one role profile 10.

As generally known in the art of computer science, a function is a computer program code snippet that can be called by other computer program code or by itself.

As used herein, a function (also called 'method' in some programming languages) has a name such as 'foo' in the following exemplary function as declared in the JavaScript programming language:

```
function foo(arg1, arg2) {...}
```

Still, as generally known in the art of computer science, a signature of a function defines the input(s) and output(s) of a function such as 'arg1' and 'arg2' in the above exemplary 'foo' function. In other words, the signature of a function includes the function name and its arguments.

Depending on the programming language, the signature of a function may comprise the types of the input(s) and output(s) of the function as exemplified with 'bar' function as declared in the C programming language and wherein the type of the return value and of the arguments 'a' and 'b' is an integer:

```
int bar(int a, int b);
```

As generally known in the art computer programming, a precompiler is a software tool that processes source code before it is compiled. It typically performs tasks such as macro expansion, file inclusion, and conditional compilation. The output of the precompiler is a modified version of the source code, which is then fed into the compiler for further processing. The modified source code may contain additional code that was added by the precompiler or may have sections of code removed based on the precompiler's processing.

In the first aspect of the subject application, the precompiler 150 is configured to receive a computer program code 30 which is in the form of a high-level programming language such as C, C++, C#, Java[tm], Python or any suitable high-level programming language.

In particular, the computer program code 30 is implementing at least one probabilistic inference algorithm configured to solve a probabilistic model.

In other words, one should understand that more than one probabilistic inference algorithm may be implemented by the computer program code 30.

As generally known in the art of probability theory and statistics, a probabilistic model allows one to infer, predict and make decisions based on incomplete or noisy data. Usually, in the art of probabilistic programming, a probabilistic model is expressed as a computer program code that can draw random values and condition the resulting stochastic execution on data. In practice, a probabilistic model is implemented using programming constructs such as recursion, stochastic branching, higher-order functions, and highly developed simulation libraries thereby allowing one to easily express and perform inference in probabilistic models that have simulators, a dynamic number of latent variables, highly structured latent variables or nested probabilistic models.

As also generally known in the art of probability theory and statistics, a probabilistic inference algorithm is configured to derive the probability of one or more random variables by considering a specific value or a set of values, in order to solve a probabilistic model.

For example, a Bernoulli (Boolean) random variable may describe the event that a given person has a disease. Such a variable could take a value of 1 (the person has the disease) or 0 (the person does not have the disease). In that case, the probabilistic inference algorithm uses probabilistic inference to estimate the probability that the random variable takes the value 1. For instance, a probability of 0.78 would mean that the person is 78% likely to have the disease.

In an embodiment, the probabilistic inference algorithm may be selected among, sequential Monte Carlo, variational inference and Markov chain Monte Carlo.

However, other known probabilistic inference algorithms may be contemplated, without requiring any substantial modification of the subject application.

In the first aspect of the subject application, the computer program code 30 comprises at least one first high-level programming statement, called sampling step, that is representative of the operation of sampling at least one random sample from at least one probability distribution function.

In other words, one should understand that more than one sampling step may be comprised in the computer program code 30 and that each sampling step may be representative of the operation of sampling more than one random sample from more than one probability distribution function.

In the first aspect of the subject application, the precompiler 150 is further configured to select a role profile 10 out of a set of role profiles 10, in response to locating a matching entry of a function signature of the sampling step in the function signature database 20.

In the first aspect of the subject application, the precompiler 150 is further configured to generate, based on the computer program code 30 and the selected role profile 10, a flag information that is indicative of whether the first high-level programming statement is representative of sampling at least one random sample from:

- a parametric probability distribution function, or
- a non-parametric probability distribution function.

In an example, the flag information may be stored as a file or an appropriate data structure in the memory 130.

In the first aspect of the subject application, the parametric probability distribution function is defined by a finite number of input parameters.

The input parameters are arguments of the parametric probability distribution function that will be described hereinafter.

Also, in the first aspect of the subject application, the nonparametric probability distribution function is defined by a plurality of first input data and at least one intermediate parameter.

In other words, one should understand that the nonparametric probability distribution function may be defined by a plurality of first input data and more than one intermediate parameter.

The first input data is an argument of the nonparametric probability distribution function, while the intermediate parameter is a parameter that is defined or calculated based on other parameters such as the first input data. Both will be described hereinafter.

As generally known in the art computer programming, a compiler is a software tool that translates source code written in a programming language into executable machine code that can be run on a computer. The compiler takes the entire source code as input, analyzes it, and generates a binary executable file. The executable file can then be run directly on the computer without any further processing.

In the first aspect of the subject application, the compiler 140 is configured to convert the computer program code 30 into first executable instructions, based on the flag information.

Further, based on the selected role profile 10, the main processor 110 is configured to execute at least a first portion of the first executable instructions.

Then, based on the selected role profile 10, the coprocessor 120 is configured to execute at least a second portion of the first executable instructions.

**First embodiment of the first aspect: parametric probability distribution function**

A first embodiment of the first aspect of the subject application occurs when,

- the flag information is indicative of the first high-level programming statement being representative of sampling at least one random sample from a parametric probability distribution function, and
- the computer program code 30 comprises at least one second high-level programming statement.

As generally known in the art of probability theory and statistics, parametric probability distribution functions are solely based on parametrized families of probability distributions (e.g., common examples of parameters are the mean and variance).

In an example, the probability distribution function is a multidimensional normal law $\mathcal{N}$ having as input parameters, an averaged vector $\mu$ and a covariance matrix $\sigma$:

$$\mathcal{N}(\mu, \sigma^2)$$

In that case, the first high-level programming statement may comprise a call to a function having the following signature:
function normalLawMulti(mu, sigma) {...}where mu and sigma are arguments of the function 'normal LawM ulti', which are respectively corresponding to the input parameters $\mu$ and $\sigma$ of the multidimensional normal law N.

In the first embodiment of the first aspect, the second high-level programming statement, called first calculating step, is representative of the operation of calculating of the input parameters based on at least one previous random sample value and/or at least one second input data.

In other words, one should understand that more than one first calculating step may be comprised in the computer program code 30 and that each first calculating step may be representative of the operation of calculating of the input parameters based on more than one previous random sample value and/or more than one second input data.

In an example, the second input data is selected among, data acquired by one or more sensors, data provided as a constraint to solve the probabilistic model.

However, data from other data sources may be used, without requiring any substantial modification of the subject application.

Further, the compiler 140 is configured to convert,

- the computer program code 30 associated with the first calculating step into second executable instructions, and
- the computer program code 30 associated with the sampling step into third executable instructions.

Still further, the main processor 110 is configured to execute the second executable instructions, and to transmit a first result of the second executable instructions to the coprocessor 120.

Said differently, with respect to the example given above, the first result would correspond to the arguments mu and sigma.

Still further, the coprocessor 120 is configured to execute the third executable instructions, while using the first result of the second executable instructions as input parameters, thereby drawing at least one random sample from the probability distribution function using the calculated input parameters.

In other words, one should understand that more than one random sample may be drawn from the probability distribution function using the calculated input parameters.

Said differently, with respect to the example given above, the drawing of a random sample from the probability distribution function would correspond to calling the function 'normalLawMulti' with the arguments mu and sigma.

In an example of the first embodiment of the first aspect of the subject application, the semiconductor system 100 further comprises a first buffer 160 for temporarily storing results of executed instructions.

In the example of the first embodiment of the first aspect of the subject application, the main processor 110 is configured to transmit the first result of the second executable instructions to the coprocessor 120 after buffering by the first buffer 160.

**Second embodiment of the first aspect: nonparametric probability distribution function**

A second embodiment of the first aspect of the subject application occurs when,

- the flag information is indicative of the first high-level programming statement being representative of sampling at least one random sample from a nonparametric probability distribution function, and
- the first high-level programming statement comprises,

  - at least one first high-level programming sub-statement, and
  - at least one second high-level programming sub-statement.

As generally known in the art of probability theory and statistics, nonparametric probability distribution functions are not based solely on parametrized families of probability distributions (e.g., input parameters $\mu$ and $\sigma$ of the multidimensional normal law $\mathcal{N}$ as described above in the first embodiment of the first aspect), because it is not possible to accurately describe a data sample using a parametric distribution. Instead, nonparametric probability distribution functions are based on either being distribution-free or having a specified distribution but with the distribution's parameters unspecified. In practice, nonparametric probability distribution functions are estimated from data based on known methods such as histograms, kernel distribution, empirical cumulative distribution function, piecewise linear distribution, pareto tails and triangular distribution.

In an example, the nonparametric probability distribution function is a product of elementary probability distribution functions, that is, a probabilistic fusion of probability distribution functions.

In that case, direct sampling of the target probability distribution function $\pi(x)$ is cumbersome and sampling intensive approaches such as Markov Chain Monte Carlo (MCMC) techniques or Approximate Bayesian Computation (ABC) techniques need to be used.

In practice, MCMC and ABC techniques provide random samples of x values, drawn from one or more proposal probability distribution functions, which follow the posterior distribution. These samples can then be used to compute an empirical approximation of the posterior probability distribution function.

However, other known sampling intensive approaches may be contemplated, without requiring any substantial modification of the subject application.

In order to exemplify the second embodiment of the first aspect of the subject application, the random drawing step will be considered as being representative of the Multiple-Try Metropolis (MTM) algorithm which basic idea is to construct an ergodic Markov chain in the state of a variable of interest x that has the target probability distribution function as its stationary distribution.

Below, we will summarize the principles of MTM algorithms. However, one can get further details in Pandolfi, S., Bartolucci, F. & Friel, N. (2010). A generalization of the Multiple-try Metropolis algorithm for Bayesian estimation and model selection. Proceedings of the Thirteenth International Conference on Artificial Intelligence and Statistics, in Proceedings of Machine Learning Research 9:581-588, https://proceedings.mlr.press/v9/pandolfi10a.html.

In principle, the MTM algorithm may be seen as a form of generalized rejection sampling, where the next state of the chain $x_{t+1}$ is drawn from a proposal distribution $T(x_t, \cdot)$ and the candidate point $x_{t+1} = y$ (where y correspond to the observations/measurements) is accepted with the following probability, called Metropolis Hastings (MH) ratio:

$$\alpha = min\left\{1, \frac{\pi(y)T(y,x_t)}{\pi(x_t)T(x_t,y)}\right\}$$

In this way, the generated chain is reversible, with invariant/stationary distribution $\pi(y)$, because it satisfies the detailed balance condition, i.e., $\pi(y)P(y,x) = \pi(x)P(x,y)$ where $P(y, x)$ is the transition kernel from y to x.

In particular, the MTM algorithm suppose that the current state of the Markov chain is $x_t$ and considers,

- an arbitrary proposal function $T(x, y)$ that satisfies the condition

$$T(x,y) > 0 \Leftrightarrow T(y,x) > 0,$$

and
- an arbitrary nonnegative symmetric function $\lambda(x,y)$.

Then, the MTM algorithm performs the following steps:

- step 1: draw k independent trial proposals $y_1,..., y_k$ from $T(x_t, \cdot)$
- step 2: select a point y from $\{y_1, ..., y_k\}$ with probability proportional to $w(y_j, x_t) = x(y_j)T(y_j, x_t)\lambda(y_j, x_t)$, where $j = 1,...,k$
- step 3: draw $x_1^*,...,x_{k-1}^*$ from the distribution $T(y, \cdot)$ and set $x_k^* = x_t$.
- step 4: accept y with probability

$$\alpha = min\left\{1, \frac{w(y_1,x_t) + ... + w(y_k,x_t)}{w(x_1^*,y) + ... + w(x_k^*,y)}\right\}$$

In the second embodiment of the first aspect of the subject application, the first high-level programming sub-statement, called random drawing step, is representative of the operation of drawing of at least one random sample from a given probability distribution function.

In other words, one should understand that each sampling step may comprise more than one random drawing step, wherein each random drawing step is representative of the operation of drawing of more than one random sample from a given probability distribution function.

In the context of the MTM algorithm example, the random drawing step may correspond to step 1 and/or step 3.

In that case, the first high-level programming sub-statement may comprise a call to a function for drawing random samples from $T(x_t, \cdot)$ and/or $T(y, \cdot)$.

In the second embodiment of the first aspect of the subject application, the second high-level programming sub-statement, called second calculating step, is representative of the operation of calculating of the intermediate parameter, based on at least one previous random sample value and/or at least one of the first input data.

In other words, one should understand that each sampling step may comprise more than one second calculating step, wherein each second calculating step is representative of the operation of calculating of the intermediate parameter, based on more than one previous random sample value and/or more than one of the first input data.

In an example, the first input data is selected among, data acquired by one or more sensors, data provided as a constraint to solve the probabilistic model.

However, data from other data sources may be used, without requiring any substantial modification of the subject application.

In the context of the MTM algorithm example, the second calculating step may correspond to the calculating of the different terms in step 2 and/or step 4.

In that case, the second high-level programming sub-statement may comprise the calculation of $w(y_j, x_t)$ and/or $w(x/,y)$.

In the second embodiment of the first aspect of the subject application, the compiler 140 is configured to convert,

- the computer program code 30 associated with the random drawing step into fourth executable instructions, and
- the computer program code 30 associated with the second calculating step into fifth executable instructions.

Further, the coprocessor 120 is configured to execute the fourth executable instructions, thereby drawing a plurality of random samples from a probability distribution function.

Then, the coprocessor 120 is configured to transmit a second result of the fourth executable instructions to the main processor 110.

Said differently, the second result would correspond to the plurality of random samples.

Still further, the main processor 110 is configured to execute the fifth executable instructions, while using the second result and/or the first input data as input parameters, thereby calculating at least one intermediate parameter.

In a first particular embodiment, the main processor 110 may be configured to transmit a third result of the fifth executable instructions to the coprocessor 120.

In a second particular embodiment, the following operations may be repeated a predetermined number of times:

- the coprocessor 120 executing the fourth executable instructions,
- the coprocessor 120 transmitting the second result of the fourth executable instructions to the main processor 110, and
- the main processor 110 executing the fifth executable instructions.

In an example of the second embodiment of the first aspect of the subject application, the semiconductor system 100 further comprises a second buffer 170 configured to temporarily store results of executed instructions.

In the example of the second embodiment of the first aspect of the subject application, the main processor 110 is configured to transmit the third result of the fifth executable instructions to the coprocessor 120 after buffering by the second buffer 170 and the coprocessor 120 is configured to transmit the second result of the fourth executable instructions to the main processor 110 after buffering by the second buffer 170.

**Third embodiment of the first aspect: multiple role profiles**

A third embodiment of the first aspect of the subject application occurs when a function signature of the function signature database 20 is associated with a plurality of role profiles 10.

In that case, in a first example, the precompiler 150 is further configured to randomly select the role profile 10 out of the plurality of role profiles 10.

Further, in a second example, the precompiler 150 is further configured to select the role profile 10 out of the plurality of role profiles 10 based on a call-context amount per processing elements of the main processor 110 and the coprocessor 120.

Finally, in a third example, the precompiler 150 is further configured to select the role profile 10 out of the plurality of role profiles 10 based on a physical resource utilization (e.g., including memory communication buses and processing elements) of the main processor 110 and the coprocessor 120.

**Second aspect: the method**

A second aspect of the subject application is illustrated in figure 2 and relates to a computer-implemented method 200 of probabilistic inference data processing in the semiconductor system 100 described above.

With the precompiler 150, the computer-implemented method 200 comprises the step of receiving 210 a computer program code 30 described above, which is in the form of a high-level programming language, and which is implementing at least one probabilistic inference algorithm configured to solve a probabilistic model.

In the second aspect of the subject application, the computer program code 30 comprises at least one first high-level programming statement, called sampling step, that is representative of the operation of sampling at least one random sample from at least one probability distribution function.

In other words, as already described above, one should understand that more than one probabilistic inference algorithm may be implemented by the computer program code 30, that more than one sampling step may be comprised in the computer program code 30 and that each sampling step may be representative of the operation of sampling more than one random sample from more than one probability distribution function.

Still with the precompiler 150, the computer-implemented method 200 comprises the step of selecting 220 a role profile 10 out of a set of role profiles 10 described above, in response to locating a matching entry of a function signature of the sampling step in the function signature database 20.

Still further with the precompiler 150, the computer-implemented method 200 comprises the step of generating 230, based on the computer program code 30 and the selected role profile 10, a flag information that is indicative of whether the first high-level programming statement is representative of sampling at least one random sample from,

- a parametric probability distribution function, or
- a non-parametric probability distribution function.

In the second aspect of the subject application, the parametric probability distribution function is defined by a finite number of input parameters, as described above.

Also, in the second aspect of the subject application, the nonparametric probability distribution function is defined by a plurality of first input data and at least one intermediate parameter, as described above.

Further, with the compiler 140, the computer-implemented method 200 comprises the step of converting 240 the computer program code 30 into first executable instructions, based on the flag information.

Still further, based on the selected role profile 10, with the main processor 110, the computer-implemented method 200 comprises the step of executing 250 at least a first portion of the first executable instructions.

Then, based on the selected role profile 10, with the coprocessor 120, the computer-implemented method 200 comprises the step of executing 260 at least a second portion of the first executable instructions.

**First embodiment of the second aspect: parametric probability distribution function**

A first embodiment of the second aspect of the subject application occurs when,

- the flag information is indicative of the first high-level programming statement being representative of sampling at least one random sample from a parametric probability distribution function, and
- the computer program code 30 comprises at least one second high-level programming statement, called first calculating step, described above, and that is representative of the operation of calculating of the input parameters based on at least one previous random sample value and/or at least one second input data.

In other words, as already described above, one should understand that more than one first calculating step may be comprised in the computer program code 30 and that each first calculating step may be representative of the operation of calculating of the input parameters based on more than one previous random sample value and/or more than one second input data.

In the first embodiment of the second aspect of the subject application, with the compiler 140, the computer-implemented method 200 comprises the step of converting 241 the computer program code 30 associated with the first calculating step into second executable instructions.

Also, in the first embodiment of the second aspect of the subject application, with the compiler 140, the computer-implemented method 200 comprises the step of converting 241 the computer program code 30 associated with the sampling step into third executable instructions.

Further, with the main processor 110, the computer-implemented method 200 comprises the step of executing 251 the second executable instructions.

Still further, as already described above, with the main processor 110, the computer-implemented method 200 comprises the step of transmitting a first result of the second executable instructions to the coprocessor 120.

Later, with the coprocessor 120, the computer-implemented method 200 comprises the step of executing 261 the third executable instructions, while using the first result of the second executable instructions as input parameters, thereby drawing at least one random sample from the probability distribution function using the calculated input parameters.

In other words, as already described above, one should understand that more than one random sample may be drawn from the probability distribution function using the calculated input parameters.

An example of the first embodiment of the second aspect of the subject application occurs when the semiconductor system 100 further comprises a first buffer 160 configured to temporarily store results of executed instructions.

In that case, with the main processor 110, the computer-implemented method 200 comprises the step of transmitting the first result of the second executable instructions to the coprocessor 120 after buffering by the first buffer 160.

**Second embodiment of the second aspect: nonparametric probability distribution function**

A second embodiment of the second aspect of the subject application occurs when,

- the flag information is indicative of the first high-level programming statement being representative of sampling at least one random sample from a nonparametric probability distribution function and the first high-level programming statement comprises, as described above,
- at least one first high-level programming sub-statement, called random drawing step, that is representative of the operation of drawing of at least one random sample from a given probability distribution function, and
- at least one second high-level programming sub-statement, called second calculating step, that is representative of the operation of calculating of the intermediate parameter, based on at least one previous random sample value and/or at least one of the first input data.

In other words, as already described above, one should understand that each sampling step may comprise more than one random drawing step, wherein each random drawing step is representative of the operation of drawing of more than one random sample from a given probability distribution function.

Also, as already described above, one should understand that each sampling step may comprise more than one second calculating step, wherein each second calculating step is representative of the operation of calculating of the intermediate parameter, based on more than one previous random sample value and/or more than one of the first input data.

In the second embodiment of the second aspect of the subject application, with the compiler 140, the computer-implemented method 200 comprises the step of converting 242,

- the computer program code 30 associated with the random drawing step into fourth executable instructions, and
- the computer program code 30 associated with the second calculating step into fifth executable instructions.

Further, with the coprocessor 120, the computer-implemented method 200 comprises the step of executing 262 the fourth executable instructions, thereby drawing a plurality of random samples from the probability distribution function.

Then, as already described above, with the coprocessor 120, the computer-implemented method 200 comprises the step of transmitting a second result of the fourth executable instructions to the main processor 110.

Still further, as already described above, with the main processor 110, the computer-implemented method 200 comprises the step of executing 252 the fifth executable instructions, while using the second result and/or the first input data as input parameters, thereby calculating at least one intermediate parameter.

In a first particular embodiment, with the main processor 110, the computer-implemented method 200 may comprise the step of transmitting a third result of the fifth executable instructions to the coprocessor 120.

In a second particular embodiment, the computer-implemented method 200 may comprise the step of repeating the following operations, a predetermined number of times:

- the coprocessor 120 executing the fourth executable instructions,
- the coprocessor 120 transmitting the second result of the fourth executable instructions to the main processor 110, and
- the main processor 110 executing the fifth executable instructions.

An example of the second embodiment of the second aspect of the subject application occurs when the semiconductor system 100 further comprises a second buffer 170 configured to temporarily store results of executed instructions.

In another example of the second embodiment of the second aspect of the subject application, with the main processor 110, the computer-implemented method 200 comprises the step of transmitting the third result of the fifth executable instructions to the coprocessor 120 after buffering by the second buffer 170.

Further, in the example of the second embodiment of the second aspect of the subject application with the coprocessor 120, the computer-implemented method 200 comprises the step of transmitting the second result of the fourth executable instructions to the main processor 110 after buffering by the second buffer 170.

**Third embodiment of the second aspect: multiple role profiles**

A third embodiment of the second aspect of the subject application occurs when a function signature of the function signature database 20 is associated with a plurality of role profiles 10.

In that case, in a first example, with the precompiler 150, the computer-implemented method 200 comprises the step of randomly selecting 221 the role profile 10 out of the plurality of role profiles 10.

Further, in a second example, with the precompiler 150, the computer-implemented method 200 comprises the step of selecting 221 the role profile 10 out of the plurality of role profiles 10 based on a call-context amount per processing elements of the main processor 110 and the coprocessor 120.

Finally, in a third example, with the precompiler 150, the computer-implemented method 200 comprises the step of selecting 221 the role profile 10 out of the plurality of role profiles 10 based on a physical resource utilization (e.g., including memory communication buses and processing elements) of the main processor 110 and the coprocessor 120.

**Various other embodiments**

The description of the subject application has been presented for purposes of illustration and description but is not intended to be exhaustive or limited to the application in the form disclosed. The embodiments were chosen and described to better explain the principles of the application and the practical application, and to enable the skilled person to understand the application for various embodiments with various modifications as are suited to the particular use contemplated.

For instance, the skilled person could easily adapt the teachings of the subject application to make:

- the first buffer 160 and the second buffer 170 being the same element,
- the first buffer 160 and the second buffer 170 being part of the main processor 110, and
- the plurality of role profiles 10 being stored in the memory 130.

**Claims**

1. A semiconductor system (100) configured to provide probabilistic inference data processing comprising:

> - at least one main processor (110),
> - at least one coprocessor (120),
> - at least one memory (130) configured to store,
>
> > - a set of role profiles (10), each defining the role of the main processor (110) and the role of the coprocessor (120) in executing executable instructions associated with one or more computer program codes, and
> > - a function signature database (20) associating a function signature with at least one role profile (10),
>
> - at least one compiler (140), and
> - at least one precompiler (150) configured to,
>
> > - receive a computer program code (30) which is in the form of a high-level programming language and which is implementing at least one probabilistic inference algorithm configured to solve a probabilistic model, the computer program code (30) comprising at least one first high-level programming statement, called sampling step, that is representative of the operation of sampling at least one random sample from at least one probability distribution function,
> > - select a role profile (10) out of a set of role profiles (10), in response to locating a matching entry of a function signature of the sampling step in the function signature database (20), and
> > - generate, based on the computer program code (30) and the selected role profile (10), a flag information that is indicative of whether the first high-level programming statement is representative of sampling at least one random sample from,

- a parametric probability distribution function defined by a finite number of input parameters, or
- a nonparametric probability distribution function defined by a plurality of first input data and at least one intermediate parameter,

wherein,

- the compiler (140) is configured to convert the computer program code (30) into first executable instructions, based on the flag information, and based on the selected role profile (10),
- the main processor (110) is configured to execute at least a first portion of the first executable instructions, and
- the coprocessor (120) is configured to execute at least a second portion of the first executable instructions.

2. The semiconductor system (100) of claim 1, wherein,
when,

- the flag information is indicative of the first high-level programming statement being representative of sampling at least one random sample from a parametric probability distribution function, and
- the computer program code (30) comprises at least one second high-level programming statement, called first calculating step, that is representative of the operation of calculating of the input parameters based on at least one previous random sample value and/or at least one second input data,

then,

- the compiler (140) is configured to convert,

- the computer program code (30) associated with the first calculating step into second executable instructions, and
- the computer program code (30) associated with the sampling step into third executable instructions,

- the main processor (110) is configured to,

- execute the second executable instructions, and

- transmit a first result of the second executable instructions to the coprocessor (120),
- the coprocessor (120) is configured to execute the third executable instructions, while using the first result of the second executable instructions as input parameters, thereby drawing at least one random sample from the probability distribution function using the calculated input parameters.

3. The semiconductor system (100) of claim 2, further comprising a first buffer (160) configured to temporarily store results of executed instructions, wherein the main processor (110) is configured to transmit the first result of the second executable instructions to the coprocessor (120) after buffering by the first buffer (160).

4. The semiconductor system (100) of any one of claims 1 to 3,
wherein,
when,

- the flag information is indicative of the first high-level programming statement being representative of sampling at least one random sample from a nonparametric probability distribution function and the first high-level programming statement comprises,
- at least one first high-level programming sub-statement, called random drawing step, that is representative of the operation of drawing of at least one random sample from a given probability distribution function, and
- at least one second high-level programming sub-statement, called second calculating step, that is representative of the operation of calculating of the intermediate parameter, based on at least one previous random sample value and/or at least one of the first input data,

then,

- the compiler (140) is configured to convert,

- the computer program code (30) associated with the random drawing step into fourth executable instructions, and
- the computer program code (30) associated with the second calculating step into fifth executable instructions,

- the main processor (110) is configured to,

- execute the fifth executable instructions, and
- transmit a third result of the fifth executable instructions to the coprocessor (120),

- the coprocessor (120) is configured to,

- execute the fourth executable instructions, while using the third result of the fifth executable instructions as an intermediate parameter, thereby drawing at least one random sample from the probability distribution function using the first input data, and
- transmit, when required, a second result of the fourth executable instructions to the main processor (110).

5. The semiconductor system (100) of claim 4, further comprising a second buffer (170) configured to temporarily store results of executed instructions, wherein,

- the main processor (110) is configured to transmit the third result of the fifth executable instructions to the coprocessor (120) after buffering by the second buffer (170), and
- the coprocessor (120) is configured to transmit the second result of the fourth executable instructions to the main processor (110) after buffering by the second buffer (170).

6. The semiconductor system (100) of any one of claims 1 to 5, wherein when a function signature of the function signature database (20) is associated with a plurality of role profiles (10), then the precompiler (150) is further configured to select the role profile (10) out of the plurality of role profiles (10), either randomly, based on a call-context amount per processing elements of the main processor (110) and the coprocessor (120), or based on a physical resource utilization of the main processor (110) and the coprocessor (120).

7. The semiconductor system (100) of any one of claims 1 to 6, wherein at least one role profile (10) defines the role of each of a plurality of main processors (110).

8. The semiconductor system (100) of any one of claims 1 to 7, wherein at least one role profile (10) defines the role of each of a plurality of coprocessors (120).

9. A computer-implemented method (200) of probabilistic inference data processing in a semiconductor system (100) comprising at least one main processor (110), at least one coprocessor (120), at least one memory (130), at least one compiler (140) and at least one precompiler (150), the memory (130) configured to store,

- a set of role profiles (10), each defining the role of the main processor (110) and the role of the coprocessor (120) in executing executable instructions associated with one or more computer program codes, and
- a function signature database (20) associating a function signature with at least one role profile (10),
- at least one compiler (140),

the method comprising the steps of,

- with the precompiler (150),

- receiving (210) a computer program code (30) which is in the form of a high-level programming language and which is implementing at least one probabilistic inference algorithm configured to solve a probabilistic model, the computer program code (30) comprising at least one first high-level programming statement, called sampling step, that is representative of the operation of sampling at least one random sample from at least one probability distribution function,
- selecting (220) a role profile (10) out of the set of role profiles (10), in response to locating a matching entry of a function signature of the sampling step in the function signature database (20), and
- generating (230), based on the computer program code (30) and the selected role profile (10), a flag information that is indicative of whether the first high-level programming statement is representative of sampling at least one random sample from,

- a parametric probability distribution function defined by a finite number of input parameters, or
- a nonparametric probability distribution function defined by a plurality of first input data and at least one intermediate parameter,

- with the compiler (140), converting (240) the computer program code (30) into first executable instructions, based on the flag information, and based on the selected role profile (10),

- with the main processor (110), executing (250) at least a first portion of the first executable instructions, and
- with the coprocessor (120), executing (260) at least a second portion of the first executable instructions.

**10.** The computer-implemented method (200) of claim 9, wherein,
when,

- the flag information is indicative of the first high-level programming statement being representative of sampling at least one random sample from a parametric probability distribution function, and
- the computer program code (30) comprises at least one second high-level programming statement, called first calculating step, that is representative of the operation of calculating of the input parameters based on at least one previous random sample value and/or at least one second input data,

then,

- with the compiler (140), converting (241),

- the computer program code (30) associated with the first calculating step into second executable instructions, and
- the computer program code (30) associated with the sampling step into third executable instructions,

- with the main processor (110),

- executing (251) the second executable instructions, and
- transmitting a first result of the second executable instructions to the coprocessor (120)

- with the coprocessor (120), executing (261) the third executable instructions, while using the first result of the second executable instructions as input parameters, thereby drawing at least one random sample from the probability distribution function using the calculated input parameters.

**11.** The computer-implemented method (200) of any one of claims 9 to 10, further comprising, when the semiconductor system (100) further comprises a first buffer (160) configured to temporarily store results of executed instructions, with the main processor (110), transmitting the first result of the second executable instructions to the coprocessor (120) after buffering by the first buffer (160).

**12.** The computer-implemented method (200) of any one of claims 9 to 11, wherein,
when,

- the flag information is indicative of the first high-level programming statement being representative of sampling at least one random sample from a nonparametric probability distribution function and the first high-level programming statement comprises,

- at least one first high-level programming sub-statement, called random drawing step, that is representative of the operation of drawing of at least one random sample from a given probability distribution function, and
- at least one second high-level programming sub-statement, called second calculating step, that is representative of the operation of calculating of the intermediate parameter, based on at least one previous random sample value and/or at least one of the first input data,

then,

- with the compiler (140), converting (242),

  - the computer program code (30) associated with the random drawing step into fourth executable instructions, and
  - the computer program code (30) associated with the second calculating step into fifth executable instructions,

- with the coprocessor (120),

  - executing (262) the fourth executable instructions from the compiler (140) memory (130), thereby drawing a plurality of random samples from the probability distribution function, and
  - transmitting a second result of the fourth executable instructions to the main processor (110),

- with the main processor (110),

  - executing (252) the fifth executable instructions from the compiler (140) memory (130), while using the second result and/or the first input data as input parameters, thereby calculating at least one intermediate parameter.

13. The computer-implemented method (200) of claim 12, further comprising, when the semiconductor system (100) further comprises a second buffer (170) configured to temporarily store results of executed instructions,

    - with the main processor (110), transmitting the third result of the fifth executable instructions to the coprocessor (120) after buffering by the second buffer (170), and/or
    - with the coprocessor (120), transmitting the second result of the fourth executable instructions to the main processor (110) after buffering by the second buffer (170).

14. The computer-implemented method (200) of any one of claims 9 to 13, wherein when a function signature of the function signature database (20) is associated with a plurality of role profiles (10), then with the precompiler (150), selecting (221) the role profile (10) out of the plurality of role profiles (10) either randomly, based on a call-context amount per processing elements of the main processor (110) and the coprocessor (120), or based on a physical resource utilization of the main processor (110) and the coprocessor (120).

[Fig. 1]

Fig. 1

[Fig. 2]

Fig. 2

Europäisches
Patentamt
European
Patent Office
Office européen
des brevets

# EUROPEAN SEARCH REPORT

Application Number

EP 23 16 4648

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Rezaur Rahman: "Xeon Phi Core Microarchitecture", , 31 December 2013 (2013-12-31), XP055355461, DOI: 10.1007/978-1-4302-5927-5 ISBN: 978-1-4302-5927-5 Retrieved from the Internet: URL:http://www.apress.com/gp/book/97814302 59268?wt_mc=ThirdParty.RD.3.EPR653.About_e Book [retrieved on 2017-03-16] | 1,9 | INV. G06F8/41 |
| A | * page 15 * * page 18 * * page 23 * * page 118 * | 2-8, 10-14 | |

-----

TECHNICAL FIELDS
SEARCHED      (IPC)

G06F

The present search report has been drawn up for all claims

| Place of search | Date of completion of the search | Examiner |
|---|---|---|
| Munich | 5 September 2023 | Kamps, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PANDOLFI, S. ; BARTOLUCCI, F. ; FRIEL, N.** A generalization of the Multiple-try Metropolis algorithm for Bayesian estimation and model selection. *Proceedings of the Thirteenth International Conference on Artificial Intelligence and Statistics, in Proceedings of Machine Learning Research,* 2010, vol. 9, 581-588, https://proceedings.mlr.press/v9/pandolfi10a.html